## Europäisches Patentamt

## European Patent Office

## Office européen des brevets

(11) Publication number: **0 280 527**
**A2**

(12) # EUROPEAN PATENT APPLICATION

(21) Application number: **88301580.2**

(22) Date of filing: **24.02.88**

(51) Int. Cl.⁴: **B 25 F 5/02**
**B 25 G 1/06, B 25 F 3/00**

(30) Priority: **24.02.87 GB 8704265**
**19.11.87 GB 8727118**

(43) Date of publication of application:
**31.08.88 Bulletin 88/35**

(84) Designated Contracting States:
**AT BE CH DE ES FR GB GR IT LI LU NL SE**

(71) Applicant: **Tai-Her, Yang**
**5-1 Taipin Street**
**Si-Hu Town Dzan-Hwa (TW)**

(72) Inventor: **Tai-Her, Yang**
**5-1 Taipin Street**
**Si-Hu Town Dzan-Hwa (TW)**

(74) Representative: **Arthur, Bryan Edward et al**
**Withers & Rogers 4 Dyer's Buildings Holborn**
**London EC1N 2JT (GB)**

(54) **Modular manual electric appliance.**

㊼ A modular electric appliance comprises an appliance module (202) which carries contacts (220) on its exterior and may be inserted within a tubular portion (103) of the handle portion (106) of the appliance. Preferably the appliance module carries two different appliance portions at its opposite ends such as a drill chuck (213) and a socket wrench (212). If these appliance portions are rotary tools, they may be driven by a common electric motor (201). The appliance module is energised from annular contacts (208) formed on the interior surface of the tubular portion (103). In an alternative embodiment, the module (202) may carry three or more contacts (220) so disposed that only one pair of these contacts is energised according to the orientation of the modular when it is inserted into the tubular portion (103). This ensures that only the appliance portion protruding from the tubular portion (103) is energised.

FIG. 3

EP 0 280 527 A2

**Description**

## MODULAR MANUAL ELECTRIC APPLIANCE

The present invention relates to manual electric appliances such as electric drills for example.

A variety of hand held electric tools are available, such as electric drills, electric screw drivers, electric socket wrenches and the like, and since such tools tend to be relatively bulky and heavy it is tiring and inconvenient to carry a set of different hand held electric tools around a site.

In order to overcome this problem, the invention provides a hand held electric appliance comprising a handle portion and characterised by a generally tubular portion extending therefrom and carrying a plurality of power supply contacts on its interior, an electric appliance module being releasable mounted within such tubular portion and incorporating an electric appliance portion which is connected to further contacts located on the exterior of the appliance module, which further contacts engage said power supply contacts within said tubular portion.

This enables a kit containing one handle portion with its tubular extension and a plurality of electric appliance modules to replace a set of conventional hand held electric appliances. When a different function is required, the electric appliance module within the tubular portion maybe replaced by the user with an appropriate different module.

In a preferred embodiment of the invention, the appliance module carries a plurality of electric appliance portions and can be mounted within a tubular portion in a selected one of a plurality of orientations so as to expose a selected of said appliance portions and house another of said appliance portions according to the orientation selected.

These appliance portions may be high-speed and rotary tools respectively and may be driven by a common electric motor located within their appliance module.

Further advantageous preferred features are defined in the dependent claims.

Preferred embodiments of the invention are described below by way of example only with reference to Figures 1 to 18 of the accompanying drawings, of which:

Figure 1 is an elevation, partly in section of hand held electric tool in accordance with the invention;

Figure 2 is an exploded perspective view showing the connection between the handle and tubular portion of the tool of Figure 1;

Figure 3 is an elevation, partly in section showing a further embodiment of the invention;

Figure 4 is a section taken on IV - IV of Figure 3;

Figure 5 is an end elevation showing an alternative configuration of the module 202;

Figure 6 shows a further possible configuration of module 202;

Figure 7 shows a further possible configuration of module 202;

Figure 8 is a perspective view showing a method of fixing module 202 within tubular portion 103;

Figure 9 is perspective view showing an alternative method of fixing module within tubular portion 103;

Figure 10 is perspective view showing a further possible method of fixing module 202 within tubular portion 103;

Figure 11 is a side elevation of further embodiment of the invention;

Figure 12 shows a further module which maybe used in electric appliances in accordance with the invention;

Figure 14 is a perspective view of a further embodiment of the invention;

Figure 15 is a wiring diagram of the embodiment of the embodiment of Figure 14;

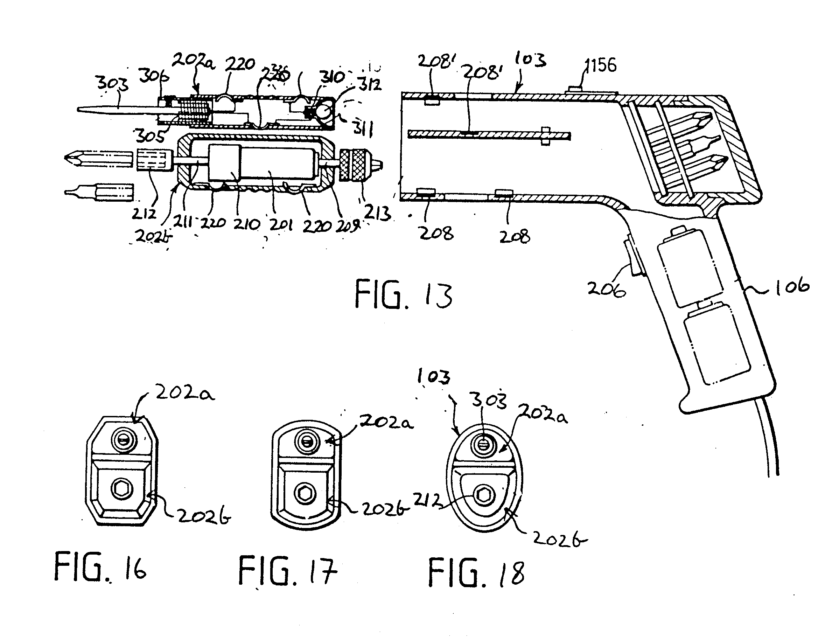

Figure 13 is a side elevation, partly in section of the embodiment of Figure 14;

Figure 16 is an end elevation showing a variant of the embodiment of Figures 13 to 15;

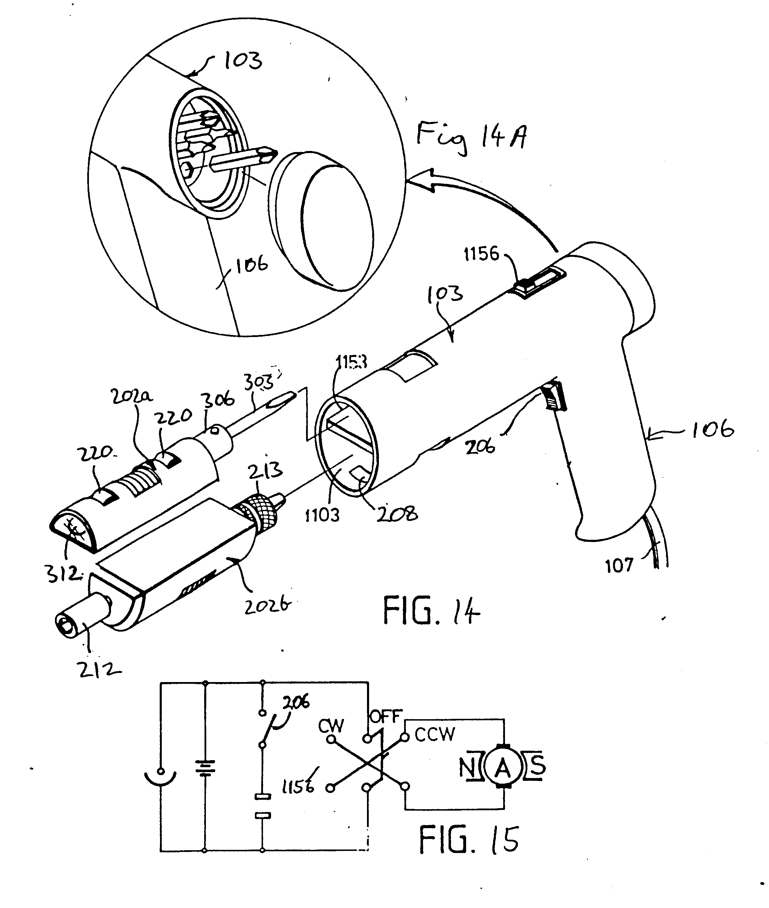

Figure 17 is an end elevation showing a further variant of this embodiment,

Figure 18 is an end elevation showing yet another variant of this embodiment.

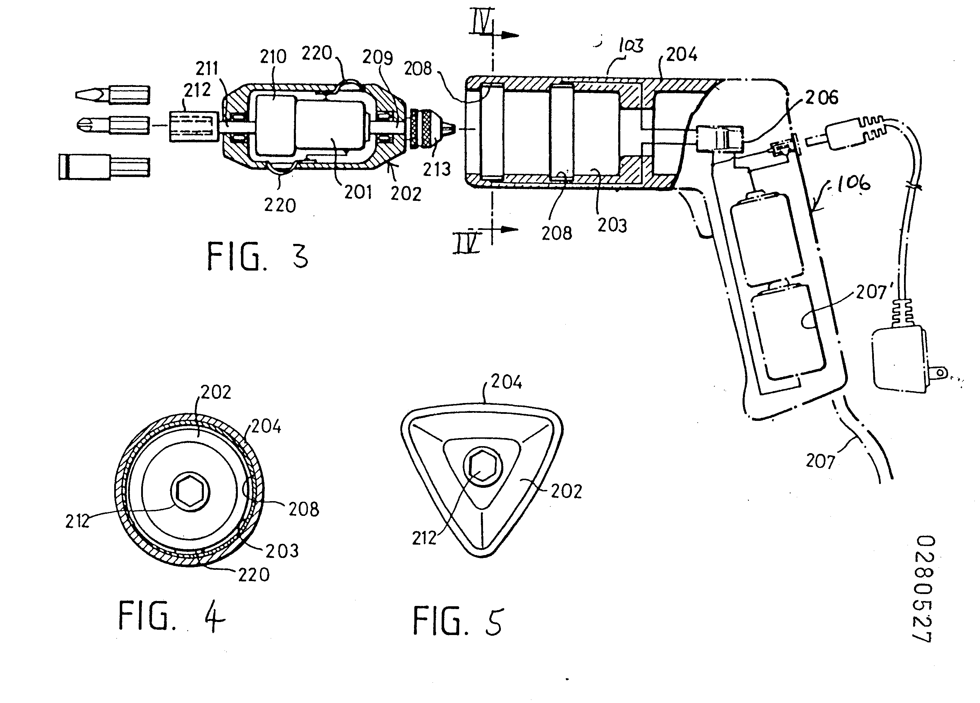

The hand tools shown in Figure 1 comprises a handle portion 106 which is pivotally connected to a tubular portion 103, into which is releasably mounted an appliance module 202, in a manner which is described in detail with reference to Figure 3 below. Rechargeable nickel cadmium cells 1 and 2 are held within handle 106 by a screw - in cap 3. The pivotal connection between handle 106 and handle portion 103 is provided by a lug 104 which extends within a split portion and is held therein by a bolt 108 whose shank 107 passes through hole 105 and a nut 111 which screws onto the threaded portion of the bolt. The head of the bold fits within a hexagonal recess 102. The upper and lower surfaces of lug 104 are serrated and the inner surfaces of the split portion of tubular portion 103 are similarly serrated so that when the nut 111 and bolt 108 are tightened the engagements of the serrated surfaces locks the tubular portion 103 in a fixed orientation with respect to the handle 106. By unscrewing the nut 111 the split portions of the tubular portion 103 (which are resilient) can move apart slightly so that the angle between the handle 106 and tubular portion 103 can be adjusted.

Referring to Figures 3 and 4, an electric appliance module 202 is shown withdrawn from the interior 203 of the tubular portion 103 which extends from handle portion 106. As seen in Figures 3 and 4, two annular contacts 208 are provided on the interior 203 and engage respective contacts 220 which in turn are connected to a motor 201 of module 202. Motor 201 is connected directly to a high speed output shaft 209 which carries a drill chuck 213 and is connected via a gear box 210 to a low speed output shaft 211 which carries a socket wrench 212. When the module 202 is inserted in tubular portion 103 a connection with a power source which maybe either a mains lead 207 or a battery assembly 207 prime can be established by operating a switch 206. If a battery assembly 207 prime is employed as the power source a socket (unreferenced) maybe provided on the exterior of handle 106 to enable the batteries to be recharged from a plug (unreferenced) attached to a DC supply.

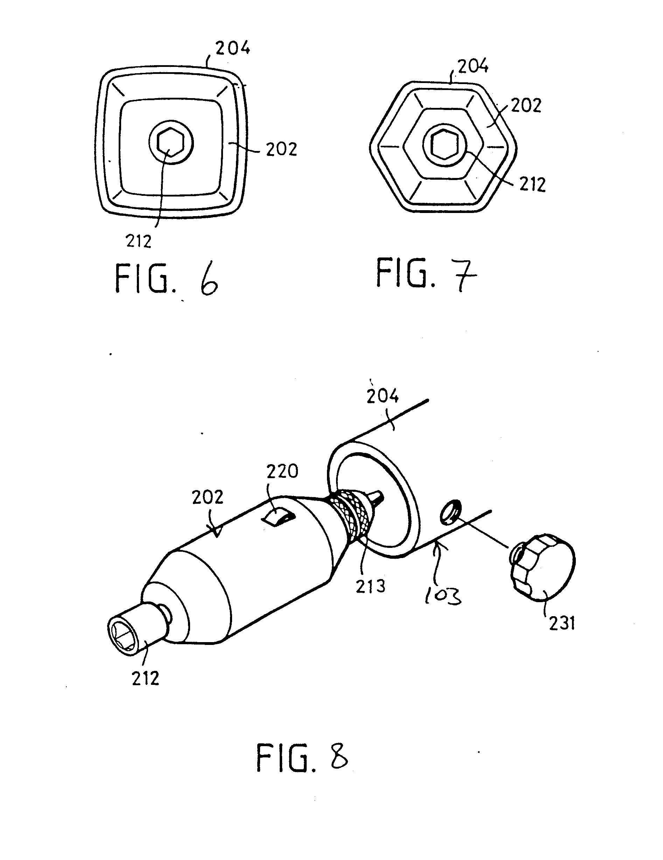

Although the casing 204 of tubular portion 103 is shown as having a circular cross-section in Figure 4, it may alternatively have a generally triangular configuration as shown in Figure 5, a generally rectangular configuration as shown in Figure 6 or a hexagonal configuration as shown in Figure 7.

If a circular configuration is employed, a screw 231 maybe provided as shown in Figure 8 which screws through the casing 204 of tubular portion 103 to engage module 202 and prevent it from rotating within tubular portion 103.

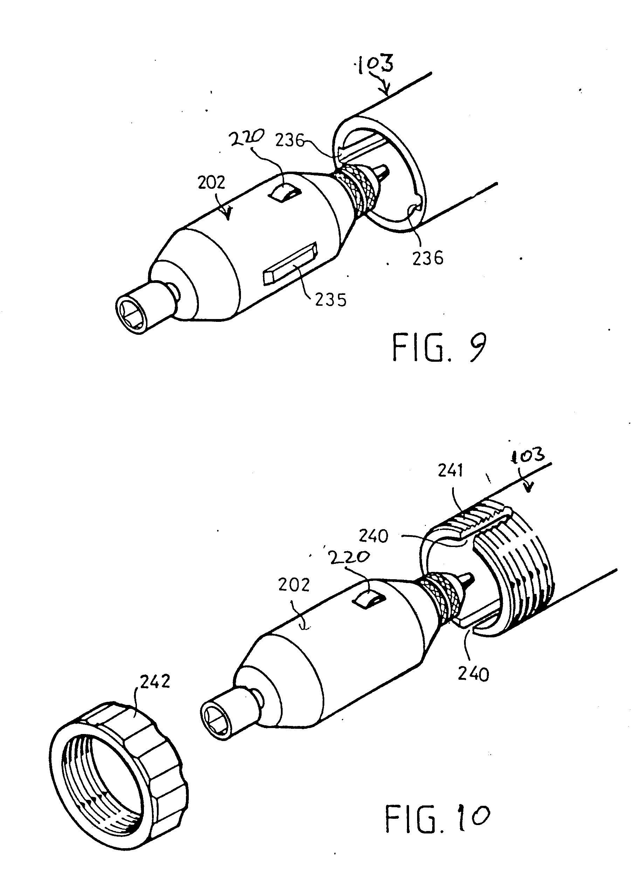

An alternative method of locking module 202 in position is shown in Figure 9 which shows grooves 236 in tubular portion 103 which engage projections 235 (only one of which is shown) in module 202 to prevent it rotating.

A further possible arrangement is shown in Figure 10 wherein diametrically opposed slots to 40 in the mouth of tubular portion 103 which enable the resulting split portions of this mouth to be forced together against the exterior of module 202 inserted therein when an undersized, preferably tapered ring nut 242 is screwed onto an exterior threaded portion of the mouth.

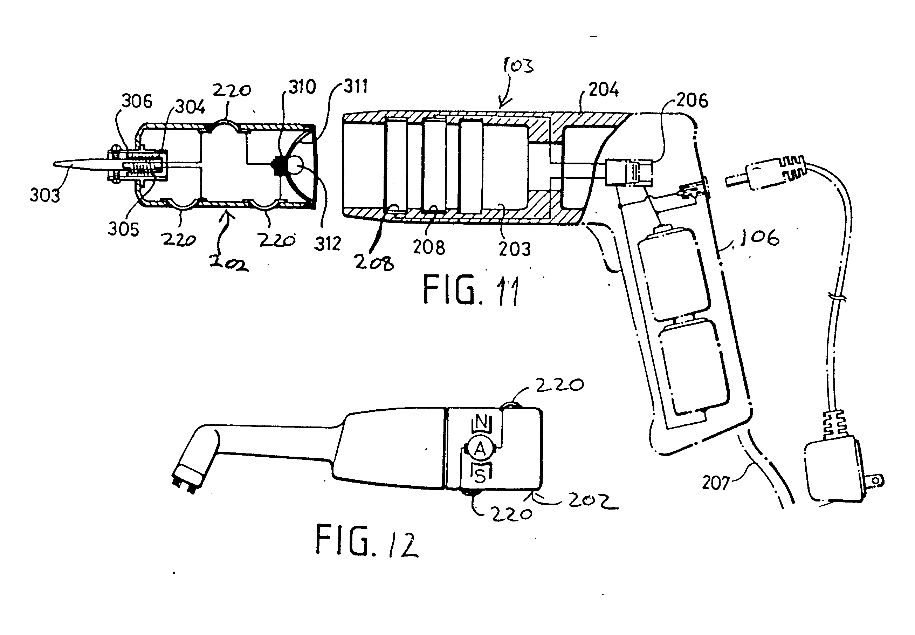

Figure 11 shows a further embodiment in which module 202 carries a lamp bulb 312 in a holder 310 mounted on a reflector 311 at one thereof and a soldering iron 303 in a heat-proof holder 306 at its opposite end. The soldering iron is provided with a heating element 305 wound on an insulting member 304 and connected to the upper and bottom left hand pair (as shown in Figure 11) of three contacts 220 on the exterior of the module. The lamp bulb 312 is connected between the upper contact 220 and lower right hand contact 220 (as shown). When the module 202 is inserted into tubular portion 103 in the orientation shown, only the upper contact 220 and the bottom left hand contact 220 engage the respective contacts 208 so that only the soldering iron is energised on activating switch 206. If however the module 202 is rotated 180° clockwise or anticlockwise before being inserted into tubular portion 103, only the contacts connected to lamp bulb 312 engage contacts 208 so that only the lamp bulb is energised.

Figure 12 shows an alternative module which can be used in the embodiment of Figure 11. This comprises a miniature vacuum cleaner whose motor is provided with contacts 220.

The embodiment shown in Figures 13,14 and 15 incorporates two appliance modules 202A and 202B which fit into upper and lower parts 1153 and 1103 of tubular portion 103 respectively. Module 202A carries a lamp bulb 312 mounted in a holder 310 on a reflector 311 at one end thereof and carries a soldering iron 303 mounted in a heat-proof casing 303 at the other end thereof. The element 305 of the soldering is connected to a lower and an upper lift contact 220 (as shown in Figure 13) where as bulb 311 is connected to the lower and an upper right contact 220 (as shown). Accordingly, when module 202A is inserted in the orientation shown in Figures 13 and 14, the upper left and lower contacts 220 engage contact 208 prime and energise the soldering iron. Alternatively, if this module is inserted in the reverse orientation, only the contacts connected to lamp bulb 312 are energised. The lower module 202B incorporates a motor 201 which in connected to just two contacts 220 which accordingly engage contacts 208 when this module is inserted irrespective of whether a low speed shaft 211 carrying socket wrench 212 is exposed or the high speed output shaft 209 carrying drill chuck 213 is exposed. The motor 201 is connected directly to the high speed output shafts 209 and is connected via a step down gear box 210 to the low speed output shafts 211. A variety of screw-driver and other rotary tools can be fitted within socket wrench 212 as shown in Figure 13;

such tools are conveniently in a rear compartment of the handle portion as shown in Figure 14A.

An on/off switch 206 is provided and a reversing switch 1156 is also provided to enable the direction of rotation of the output shafts of motor 201 to be reversed. The circuit diagram is shown in Figure 15.

Figures 16,17 and 18 show various non-circular configurations of the modules 202A and 202B which may be fitted within correspondingly shaped tubular portions 103 of similarly non-circular configuration.

It will be appreciated that since the modules 202A and 202B are non-circular in cross-section, it is not necessary to provide any screw locking means as shown in Figure 8 to prevent them from rotating. However, it may be desirable to provide some releasable gripping means to prevent them from being withdrawn inadvertently from tubular portion 103. A variety of electric tools may be provided in modular form for insertion into tubular portion 103, such as electric brushes, electric shaping and grinding tools, electric polishing tools and the like. The embodiment of Figures 13 to 15 has the advantage that the two exposed appliance portions such as the lamp bulb 312 and drill chuck 213 (when the modules shown in Figure 13 are reversed in orientation before insertion) may cooperate. Thus the lamp bulb 312 may be arranged to illuminate the area of a hole drilled by a drill held in drill chuck 213.

The feature of the adjustable locking of the angle between the handle portion 106 and the other portion 103 as disclosed in Figures 1 and 2 is a separate feature of the invention and is not necessarily limited to the features of claim 1. Thus in another aspect, the invention provides a hand held electric tool in which the angle between the a handle portion and a body portion thereof may be adjusted.

**Claims**

1. A hand-held electric appliance comprising a handle portion (106) and characterised by a generally tubular portion (103) extending therefrom and carrying a plurality of power supply contacts (208) on its interior (203), an electric appliance module (202) being releasable mounted within said tubular portion and incorporating an electric appliance portion(212,213,303,311,312,1151) which is connected to further contacts (220) located on the exterior of the appliance module, which further contacts engage said power supply contacts within said tubular portion.

2. An appliance as claimed in claim 1 wherein said appliance module (202) carries a plurality of electric appliance portions (212,213,303,311,312,1151) and can be mounted within said tubular portion (103) in a selected one of a plurality of orientations so as to expose a selected one of said appliance portions according to the orientation selected.

3. An appliance as claimed in claim 2 wherein said appliance portions (212,213,303,1151) one high-speed and low-speed rotary tools respectively and are driven by a common electric motor (201) located within said appliance module (202).

4. An appliance as claimed in claim 3 wherein said low-speed appliance portion is an electric socket wrench (212) or screwdriver (1151) and said high-speed appliance portion is independently an electric drill chuck (213) or an electric brush.

5. An appliance as claimed in claim 2 wherein said appliance module carries (202) at least three of said further contacts (220) which are so connected and disposed that only the exposed appliance portion (212,213,303,311,312,1151) is energised from said power supply contacts.

6. An appliance as claimed in any preceding claim wherein said tubular portion (103) carries two such appliance modules (202a,202b) releasable located side by side and having two respective appliance portions (212,312) exposed simultaneously.

7. An appliance as claimed in claim 6 wherein one of said exposed appliance portions is a height (312) which is arranged to illuminate the area operated on by the other exposed appliance portions (212).

8. An appliance as claimed in any preceding claim wherein the orientation of said handle portion (106) relative to said tubular portion (103) is adjustable.

9. An appliance as claimed in claim 8 wherein said orientation of said handle portion (106) can be releasable locked by screw means (108,111).

10. An electric appliance kit comprising a handle portion (106) having a tubular portion (103) as defined in any of claims 8 and 9 extending therefrom and a plurality of electric appliance modules (202) as defined in any of claims 2 to 7 which can be selectively fitted within said tubular portion.

FIG. 3

FIG. 4

FIG. 5

0280527

0280527

FIG. 6

FIG. 7

FIG. 8

0280527

FIG. 9

FIG. 10

FIG. 11

FIG. 12

FIG. 13

FIG. 16

FIG. 17

FIG. 18

0280527

0280527

Fig 14A

FIG. 14

FIG. 15